# EUROPEAN PATENT APPLICATION

(11) **EP 4 524 736 A1**
(43) Date of publication of application: **19.03.2025**
(21) Application number: 23802915.1
(22) Date of filing: 09.05.2023
(51) Int. Cl.: G06F 9/455

(54) **ALGORITHM MODEL RUNNING PROCESSING METHOD AND APPARATUS, AND INTELLIGENT EDGE DEVICE**

(30) Priority: 09.05.2022 CN 202210501689
(71) Applicant: Hangzhou Hikvision Digital Technology Co., Ltd., Hangzhou, Zhejiang 310051 (CN)
(72) Inventor: GONG, Hehe, Hangzhou, Zhejiang 310051 (CN)
(74) Representative: Epping - Hermann - Fischer
(86) International application number: PCT/CN2023/093032
(87) International publication number: WO 2023/217146

(57) **Abstract**

The present application discloses an algorithm model running processing method and apparatus, and an intelligent edge device. The method comprises: obtaining at least one algorithm model, wherein the algorithm model is an artificial intelligence algorithm model; obtaining a plurality of virtual engines, wherein the virtual engines are virtualized engines obtained after performing software packaging in a physical engine; respectively binding each algorithm model in the at least one algorithm model to one virtual engine, wherein one virtual engine is used for binding one algorithm model; and receiving a task, and executing the task in the virtual engine with the algorithm model. According to the present application, simultaneous running of multiple algorithm models can be realized in the intelligent edge device, and the requirements of low cost and a fusion analysis of multiple algorithm models are met.

## Description

### Technical Field

The present application relates to the field of intelligent analysis, in particular to an algorithm model running and processing method and apparatus, and an edge intelligent device.

### Background

With the promotion of an Artificial Intelligence (AI) open platform, the AI open platform needs to support multiple algorithm models, such as an algorithm models for implementing video structured processing, an algorithm model for implementing image analysis and the like. In order to support multiple algorithm models, it is necessary to deploy multiple edge intelligent devices (also known as edge intelligent boxes). The edge intelligent devices are devices configured for intelligent analysis of videos/pictures, and each edge intelligent device can support only one algorithm model. For example, the edge intelligent device has one physical engine in which one algorithm model is run, thereby achieving functions supported by the algorithm model. Alternatively, in order to support multiple algorithm models, it is necessary to increase the number of physical engines in an edge intelligent device, and each physical engine can support only one algorithm model. For example, the edge intelligent device has multiple physical engines, and one algorithm model is run in one physical engine, thereby achieving the functions supported by the algorithm model. Obviously, for an edge intelligent device with one physical engine, some simultaneous analysis scenarios that require support from multiple algorithm models cannot be achieved in the edge intelligent device. For an edge intelligent device with multiple physical engines, the cost thereof is high, and deploying of the edge intelligent device with multiple physical engines is not suitable.

### Summary

The embodiments of the present application provide an algorithm model running and processing method and apparatus, and an edge intelligent device, which can implement a simultaneous analysis scenario that requires support from multiple algorithm models in the edge intelligent device.

According to one aspect of the present application, An algorithm model running and processing method is provided, including: obtaining at least one algorithm model, wherein the algorithm model is an artificial intelligence algorithm model; obtaining multiple virtual engines, wherein the virtual engines are engines virtualized from a physical engine after software encapsulating of the physical engine, and the number of the obtained virtual engines is greater than or equal to the number of the obtained algorithm models; binding each algorithm model in the at least one algorithm model to a virtual engine and running the algorithm model in the virtual engine, wherein one virtual engine is configured to be bound with one algorithm model; receiving a task and executing the task in the virtual engine with the algorithm model.

Furthermore, executing the task in the virtual engine with the algorithm model includes: obtaining a pre-configured predetermined order, wherein the predetermined order is configured for indicating a running order of multiple algorithm models in case that the multiple algorithm models run in coordination with each other to execute the task; based on the predetermined order, sequentially running the multiple algorithm models in multiple virtual engines corresponding to the multiple algorithm models to execute the task, wherein during running the multiple algorithm models to execute the task, an output of an algorithm model that runs firstly is used as an input of an algorithm model that runs later.

Furthermore, the method further includes: limiting a performance of each virtual engine in the multiple virtual engines based on a performance of the physical engine in case that the task is executed in the multiple virtual engines, wherein the performance of the physical engine is configured for indicating an upper limit of a processing capability of the physical engine, and the performance of the virtual engine is configured for indicating an upper limit of a processing capability of the virtual engine, wherein a sum of performances of the multiple virtual engines during running does not exceed the performance of the physical engine.

Furthermore, the task includes a video analysis task and/or a picture analysis task, wherein, for the video analysis task, the performance of the physical engine is to support up to N channels of video analysis, wherein N is a positive integer; for the picture analysis task, the performance of the physical engine is to analyze up to M pictures per unit time, wherein M is a positive integer.

Furthermore, limiting the performance of each virtual engine in the multiple virtual engines based on the performance of the physical engine includes: in case that the multiple virtual engines all perform video analysis, limiting a sum of the number of video channels enabled by the multiple virtual engines to be less than or equal to N; or, in case that the multiple virtual engines all perform picture analysis, limiting a sum of the number of pictures analyzed per unit time by the multiple virtual engines to be less than or equal to M; or, limiting the maximum number of pictures analyzed per unit time by at least one virtual engine for performing picture analysis to: an equivalent picture processing number * (N-N1), wherein N1 is less than N, and is greater than or equal to 0, N1 is the number of video channels enabled by a virtual engine for performing video analysis, and the equivalent picture processing number is the number of pictures that can be analyzed when a capacity to process one channel of video analysis is used for performing picture analysis.

Furthermore, limiting the maximum number of pictures analyzed per unit time by the at least one virtual engine for performing the picture analysis to: the equivalent picture processing number * (N-N1), includes: configuring a picture scheduling task, wherein the picture scheduling task is configured for sequentially sending a picture to each virtual engine in the at least one virtual engine for performing picture analysis; controlling the picture scheduling task to send one picture every predetermined time, so as to limit the maximum number of pictures analyzed per unit time by the at least one virtual engine for performing picture analysis to: the equivalent picture processing number * (N-N1), wherein the predetermined time is configured for indicating a time interval between sending two pictures, and the predetermined time is: the unit time/[the equivalent picture processing number * (N-N1)].

Furthermore, the equivalent picture processing number is M/q*N; q is a configured control coefficient, and has a value in a range of 1 to M/N.

Furthermore, after executing the task in the virtual engine with the algorithm model, the method further includes: obtaining an analysis result obtained after the virtual engine executes the task with the algorithm model; determining whether an alarm needs to be sent for the analysis result based on a pre-configured alarming condition, and if so, sending an alarm.

Furthermore, binding each algorithm model in the at least one algorithm model to a virtual engine and running the algorithm model in the virtual engine, includes: obtaining an operation signal, wherein the operation signal is configured for dragging a first object representing an algorithm model from a first display area to a second display area, the first display area displays at least one first object, each first object corresponding to one algorithm model, and the second display area displays at least one second object, each second object corresponding to one virtual engine; in response to the operation signal, in case that an overlap degree between the first object and a predetermined second object in the second display area exceeds a threshold, binding an algorithm model corresponding to the first object to an virtual engine corresponding to the predetermined second object.

Furthermore, binding each algorithm model in the at least one algorithm model to a virtual engine and running the algorithm model in the virtual engine, includes: each time after an algorithm model is loaded in the physical engine, creating a model handle corresponding to the loaded algorithm model; obtaining identification information of a virtual engine to be bound with the loaded algorithm model; establishing a correspondence between the model handle corresponding to the loaded algorithm model and the identification information, to bind the loaded algorithm model to the virtual engine corresponding to the identification information.

According to another aspect of the present application, an algorithm model running and processing apparatus is provided, including: a first obtaining module, configured for obtaining at least one algorithm model, wherein the algorithm model is an artificial intelligence algorithm model; a second obtaining module, configured for obtaining multiple virtual engines, wherein the virtual engines are engines virtualized from a physical engine after software encapsulating of the physical engine, and the number of the obtained virtual engines is greater than or equal to the number of the obtained algorithm models; a binding module, configured for binding each algorithm model in the at least one algorithm model to a virtual engine and running the algorithm model in the virtual engine, wherein one virtual engine is configured to be bound with one algorithm model; an executing module, configured for receiving a task and executing the task in the virtual engine with the algorithm model.

Furthermore, the executing module is configured for obtaining a pre-configured predetermined order, wherein the predetermined order is configured for indicating a running order of multiple algorithm models in case that the multiple algorithm models run in coordination with each other to execute the task; sequentially running, based on the predetermined order, the multiple algorithm models in multiple virtual engines corresponding to the multiple algorithm models to execute the task; wherein during running the multiple algorithm models to execute the task, an output of an algorithm model that runs firstly is used as an input of an algorithm model that runs later; and/or,
the apparatus further includes a limiting module, configured for limiting a performance of each virtual engine in the multiple virtual engines based on a performance of the physical engine in case that the task is executed in the multiple virtual engines, wherein the performance of the physical engine is configured for indicating an upper limit of a processing capability of the physical engine, and the performance of the virtual engine is configured for indicating an upper limit of a processing capability of the virtual engine, wherein a sum of performances of the multiple virtual engines during operation does not running the performance of the physical engine; and/or,
the task includes a video analysis task and/or a picture analysis task; wherein, for the video analysis task, the performance of the physical engine is to support up to N channels of video analysis, wherein N is a positive integer; for the picture analysis task, the performance of the physical engine is to analyze up to M pictures per unit time, wherein M is a positive integer; and/or,
the limiting module is configured for limiting a sum of the number of video channels enabled by the multiple virtual engines to be less than or equal to N in case that the multiple virtual engines all perform video analysis; or limiting a sum of the number of pictures analyzed per unit time by the multiple virtual engines to be less than or equal to M in case that the multiple virtual engines all perform picture analysis; or limiting the maximum number of pictures analyzed per unit time by at least one virtual engine for performing picture analysis to: an equivalent picture processing number * (N-N1), N1 is less than N, and is greater than or equal to 0, N1 is the number of video channels enabled by a virtual engine for performing video analysis, and the equivalent picture processing number is the number of pictures that can be analyzed when a capacity to process one channel of video analysis is used for performing picture analysis; and/or,
the limiting module is configured for configuring a picture scheduling task, wherein the picture scheduling task is configured for sequentially sending a picture to each virtual engine in the at least one virtual engine for picture performing analysis; controlling the picture scheduling task to send one picture every predetermined time, so as to limit the maximum number of pictures analyzed per unit time by the at least one virtual engine for performing picture analysis to: the equivalent picture processing number * (N-N1), wherein the predetermined time is configured for indicating a time interval between sending two pictures, and the predetermined time is: the unit time/[the equivalent picture processing number * (N-N1)]; and/or,
the equivalent picture processing number is M/q*N; q is a configured control coefficient, and has a value in a range of 1 to M/N; and/or,
the apparatus further includes an alarming module, configured for obtaining an analysis result obtained after the virtual engine executes the task with the algorithm model; determining whether an alarm needs to be sent for the analysis result based on a pre-configured alarming condition, and if so, sending an alarm; and/or,
the binding module is further configured for obtaining an operation signal, wherein the operation signal is configured for dragging a first object representing an algorithm model from a first display area to a second display area, the first display area displays at least one first object, each first object corresponding to one algorithm model, and the second display area displays at least one second object, each second object corresponding to one virtual engine; in response to the operation signal, binding, in case that an overlap degree between the first object and a predetermined second object in the second display area exceeds a threshold, an algorithm model corresponding to the first object to an virtual engine corresponding to the predetermined second object; and/or,
the binding module is configured for creating, each time after an algorithm model is loaded in the physical engine, a model handle corresponding to the loaded algorithm model; obtaining identification information of a virtual engine to be bound with the loaded algorithm model; establishing a correspondence between the model handle corresponding to the loaded algorithm model and the identification information, to bind the loaded algorithm model to the virtual engine corresponding to the identification information.

According to one aspect of the present application, an edge intelligent device is further provided, including a memory and a processor, w wherein the memory is configured for storing a program, the processor is configured for running the program, and the program is configured for executing the above algorithm model running and processing method.

According to one aspect of the present application, there is also provided an algorithm model running and processing system, including an edge intelligent device and an application platform, wherein a user logs into the application platform through a WEB page to manage the edge intelligent device; wherein the application platform is configured for obtaining at least one algorithm model from an AI open platform, and issuing the at least one algorithm model to the edge intelligent device, wherein the algorithm model is an artificial intelligence algorithm model; the application platform is configured for managing the virtual engines of the edge intelligent device and processing a binding relationship between virtual engines and algorithm models; wherein, the virtual engines are engines virtualized from a physical engine after software encapsulating of the physical engine, and the number of the obtained virtual engines is greater than or equal to the number of the obtained algorithm models; the binding relationship between virtual engines and algorithm models is to bind each algorithm model to a virtual engine and run the algorithm model in the virtual engine, wherein one virtual engine is configured to be bound with one algorithm model; the application platform is configured for issuing a task to the edge intelligent device; the edge intelligent device is configured for receiving the task issued by the application platform and execute the task in the virtual engine with the algorithm model.

Furthermore, the edge intelligent device is configured for obtaining, after executing the task, an analysis result obtained after the virtual engine executes the task with the algorithm model, and returning the analysis result to the application platform, the application platform is configured for determining whether an alarm needs to be sent for the analysis result based on a pre-configured alarming condition, and if so, sending an alarm.

Furthermore, the edge intelligent device includes: an intelligent engine subsystem, configured for managing the virtual engines; a model package management module, configured for adding, updating, and deleting of an algorithm model; an engine management module, configured for binding, updating, and unbinding of an algorithm model; a task management module, configured for initiating and/or closing of a task; a rule management module, configured for configuring a rule, which is a rule used by an algorithm model, to enable, based on the rule, the algorithm model to perform a calculation matching the rule; an IPC access management module, configured for managing an accessed IPC and obtaining a video stream from the IPC; an intelligent alarming module, configured for uploading an alarm.

Furthermore, the edge intelligent device, when executing the task in the virtual engine with the algorithm model, specifically is configured for: obtaining a pre-configured predetermined order, wherein the predetermined order is configured for indicating a running order of multiple algorithm models in case that the multiple algorithm models run in coordination with each other to execute the task; based on the predetermined order, sequentially running the multiple algorithm models in multiple virtual engines corresponding to the multiple algorithm models to execute the task; wherein during running the multiple algorithm models to execute the task, an output of an algorithm model that runs firstly is used as an input of an algorithm model that runs later.

Furthermore, the edge intelligent device is further configured for limiting a performance of each virtual engine in the multiple virtual engines based on a performance of the physical engine in case that the task is executed in the multiple virtual engines, wherein the performance of the physical engine is configured for indicating an upper limit of a processing capability of the physical engine, and the performance of the virtual engine is configured for indicating an upper limit of a processing capability of the virtual engine, and a sum of performances of the multiple virtual engines during running does not exceed the performance of the physical engine;
wherein, the task includes a video analysis task and/or a picture analysis task, wherein for the video analysis task, the performance of the physical engine is to support up to N channels of video analysis, wherein N is a positive integer; for the picture analysis task, the performance of the physical engine is to analyze up to M pictures per unit time, wherein M is a positive integer;
wherein, the edge intelligent device, when limiting the performance of each virtual engine in the multiple virtual engines based on the performance of the physical engine, is specifically configured for: limiting a sum of the number of video channels enabled by the multiple virtual engines to be less than or equal to N in case that the multiple virtual engines all perform video analysis; or limiting a sum of the number of pictures analyzed per unit time by the multiple virtual engines to be less than or equal to M in case that the multiple virtual engines all perform picture analysis; or limiting the maximum number of pictures analyzed per unit time by at least one virtual engine for performing picture analysis to: an equivalent picture processing number * (N-N1), wherein N1 is less than N, and is greater than or equal to 0, N1 is the number of video channels enabled by a virtual engine for performing video analysis, and the equivalent picture processing number is the number of pictures that can be analyzed when a capacity to process one channel of video analysis is used for performing picture analysis.

Furthermore, the edge intelligent device is further configured for: obtaining an operation signal, wherein the operation signal is configured for dragging a first object representing an algorithm model from a first display area to a second display area, the first display area displays at least one first object, each first object corresponding to one algorithm model, and the second display area displays at least one second object, each second object corresponding to one virtual engine; in response to the operation signals, binding, in case that an overlap degree between the first object and a predetermined second object in the second display area exceeds a threshold, an algorithm model corresponding to the first object to an virtual engine corresponding to the predetermined second object; or creating, each time after an algorithm model is loaded in the physical engine, a model handle corresponding to the loaded algorithm model; obtaining identification information of a virtual engine to be bound with the loaded algorithm model; establishing a correspondence between the model handle corresponding to the loaded algorithm model and the identification information, to bind the loaded algorithm model to the virtual engine corresponding to the identification information.

In the embodiment of the present application, the following operations are adopted: obtaining at least one algorithm model, wherein the algorithm model is an artificial intelligence algorithm model; obtaining the multiple virtual engines, wherein the virtual engines are engines virtualized from a physical engine after software encapsulating of the physical engine; binding each algorithm model in the at least one algorithm model to a virtual engine and running the algorithm model in the virtual engine, wherein one virtual engine is configured to be bound with an algorithm model; receiving a task, and executing the task in the virtual engine with the algorithm model. In the present application, a simultaneous analysis scenario that requires support from multiple algorithm models can be implemented in the edge intelligent device (which can be the edge intelligent device with one physical engine), thereby the multiple algorithm models can simultaneously run in the edge intelligent device, meeting the requirements of low-cost and multi- algorithm model fusion analysis.

### Brief Description of the Drawings

Fig.1 is a schematic diagram of an architecture of a single-engine and single-algorithm according to an embodiment of the present application;
Fig.2 is a schematic diagram of an architecture of a single-engine and multi-algorithm according to an embodiment of the present application;
Fig.3 is a flowchart of an algorithm model running and processing method according to an embodiment of the present application;
Fig.4 is a schematic diagram of an overall architecture of an system according to an embodiment of the present application;
Fig.5 is a schematic structure diagram of an edge intelligent device according to an embodiment of the present application;
Fig.6 is a schematic diagram of an architecture of a single-physical engine and multi-algorithm according to an embodiment of the present application;
Fig.7 is a schematic diagram of a software configuration according to an embodiment of the present application;
Fig.8 is a schematic diagram of the edge intelligent device is internally bound with a virtual engine according to an embodiment of the present application;
Fig.9 is a schematic diagram of the edge intelligent device issuing a task and rule according to an embodiment of the present application;
Fig.10 is a flowchart of a real-time video analysis task according to an embodiment of the present application;
Fig.11 is a flowchart of a polling video analysis task according to an embodiment of the present application;
Fig.12 is a flowchart of a timing snapshot analysis task according to an embodiment of the present application;
Fig.13 is a flowchart of an offline picture analysis task according to an embodiment of the present application;
Fig.14 is a flowchart of an offline picture scheduling task according to an embodiment of the present application.

### Detailed Description

It should be noted that the embodiments and features in the embodiments of the present application can be combined with each other in case of conflict. The present application will be described below in detail with reference to the drawings and in conjunction with embodiments.

It should be noted that the steps shown in the flowchart can be executed in a computer system such as a set of computer executable instructions, and although the logical order is shown in the flowchart, in some cases, the steps shown or described may be executed in a different order than here.

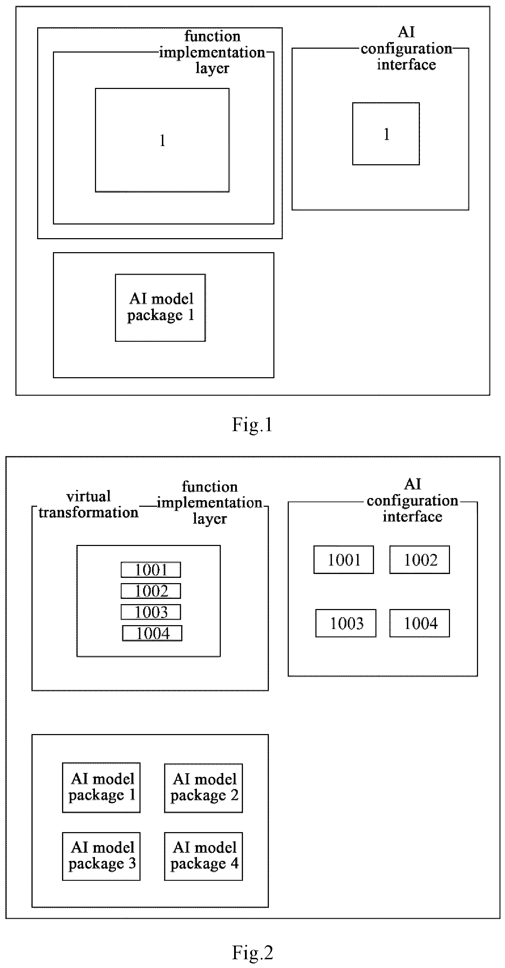

Fig.1 is a schematic diagram of an architecture of a single-engine and single-algorithm according to an embodiment of the present application. As shown in Fig. 1, for a single physical engine, if the engine is not virtualized in a function implementation layer, then there is only one physical engine in the function implementation layer, and also, one available engine is showed in an UI layer (such as an AI configuration interface). When configuring this one engine, only one algorithm model (i.e. AI model package 1) can be configured. The function implementation layer is the processing logic used for processing a user instruction. For example, when the user issues the instruction to the UI layer, the UI layer forwards the user instruction to the function implementation layer, which executes the user instruction to implement the relevant function. In this embodiment, there are no restrictions on the processing process of the function implementation layer. The physical engine is an actual processing resource, and is a physical unit with the ability to process data such as an image/video, such as a processor and other units, such as GPU (Graphics Processing Unit), which is not limited here. Of course, the physical unit also needs to rely on necessary programs for control when processing data.

In this embodiment, multiple virtual engines are virtualized for a single physical engine, allowing to run multiple algorithm models through the multiple virtual engines. Fig.2 is a schematic diagram of the architecture of a single engine and multi-algorithm according to the embodiment of the present application. As shown in Fig.2, four virtual engines 1001, 1002, 1003, and 1004 are virtualized in a single physical engine in the function implementation layer (of course, other numbers of virtual engines can also be virtualized). Therefore, these four virtual engines can also be seen in the AI configuration interface. When configuring algorithm models, different algorithm models can be configured for the four virtual engines respectively (i.e., configuring an AI model package 1 for virtual engine 1001, configuring an AI model package 2 for virtual engine 1002, and configuring an AI model package 3 for virtual engine 1003, and configuring an AI model package 4 for virtual engine 1004). The virtual engine is an engine virtualized from a physical engine after software encapsulating of the physical engine. At least one virtual engine can be virtualized from a physical engine, and the virtual engine is the virtualized unit of the physical engine. The virtual engine can be individually loaded with an algorithm model for intelligent analysis. An engine being virtualized from a physical engine after software encapsulating of the physical engine can be understood as: based on the data processing capability of the physical engine, it is defined through software as multiple capabilities using software interfaces, and the data processing capability of this physical engine can be used through any one or more of the software interfaces. The "software interface" can be equivalent to a "virtual engine". The software interface can generally be understood as various software development APIs and the like, or as an interaction interface between human and software. For one example, the user can see the identifications of N engines (i.e. virtual engines) or the entrances of the engines in the interaction interface, and these displayed virtual engines are equivalent to the aforementioned "software interfaces". Through these N virtual engines, the data processing capabilities of a certain physical engine can be used.

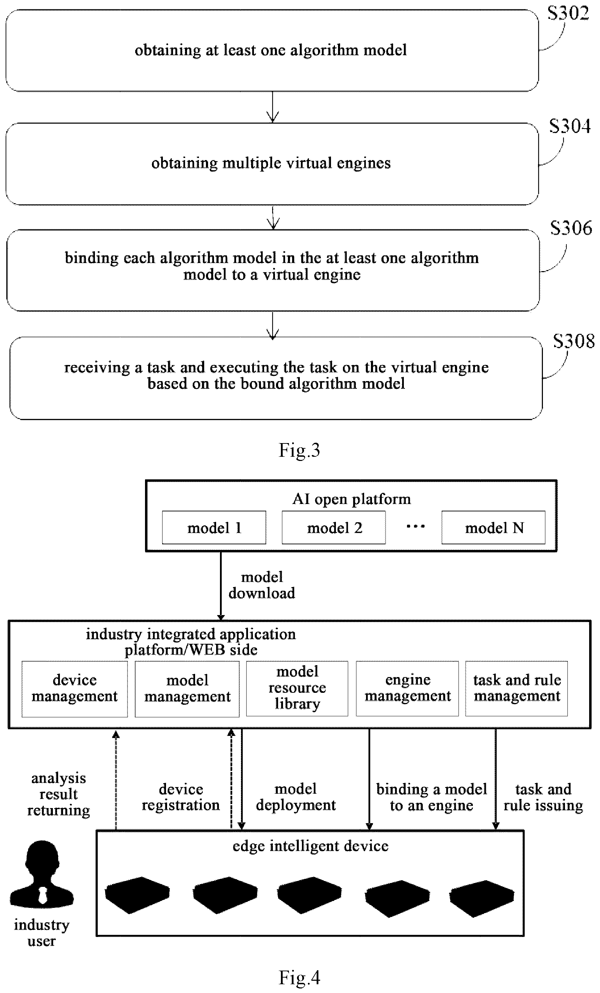

Fig.3 is a flowchart of an algorithm model running and processing method according to an embodiment of the present application. Fig.3 shows the process of configuring the algorithm model for the virtual engine. As shown in Fig.3, the process includes the following steps:
Step S302, obtaining at least one algorithm model, wherein the algorithm model is an artificial intelligence algorithm model.

Step S304: obtaining multiple virtual engines, wherein the virtual engines are engines virtualized from a physical engine after software encapsulating of the physical engine, and the number of the obtained virtual engines is greater than or equal to the number of the obtained algorithm models.

Step S306, binding each algorithm model in the at least one algorithm model to a virtual engine and running the each algorithm model in the one virtual engine, wherein one virtual engine is configured to be bound with one algorithm model.

Step S308, receiving a task and executing the task in the virtual engine with the bound algorithm model.

Through the above steps, the simultaneous analysis scenario that requires support from multiple algorithm models can be implemented in the edge intelligent device (which can be the edge intelligent device with one physical engine), thereby the multiple algorithm models can run simultaneously in the edge intelligent device, meeting the requirements of low-cost and multi-algorithm model fusion analysis.

The algorithm model in the above steps can be obtained from multiple channels, such as from an AI open platform. The above steps can be carried out in the edge intelligent device, which can obtain the algorithm model from the AI open platform. The management of the edge intelligent device, binding of algorithm models to the virtual engines and the like can be performed through an industry integrated application platform, a WEB page side, or other clients.

Fig.4 is a schematic diagram of the overall architecture of the system according to the embodiment of the present application. As shown in Fig.4, the edge intelligent device can be connected to the industry integrated application platform and log into the industry integrated application platform (referred to as a platform for short) through a web page, to manage the edge intelligent device (referred to as a device for short). The industry integrated application platform can also obtain the algorithm model (referred to as a model for short) from the AI open platform, manage the model, and establish a model resource library. The industry integrated application platform can also manage the virtual engines of the edge intelligent device and handle the binding relationship between virtual engines and models. In order to perform an intelligent analysis task, the industry integrated application platform can also issue a task and rule to the edge intelligent device. After executing the task, the edge intelligent device can return a analysis result to the industry integrated application platform. That is, the industry integrated application platform obtains the analysis result obtained after the virtual engine executes the task with the algorithm model; determines whether an alarm needs to be sent for the analysis result based on a pre-configured alarming condition; and if so, sending an alarm.

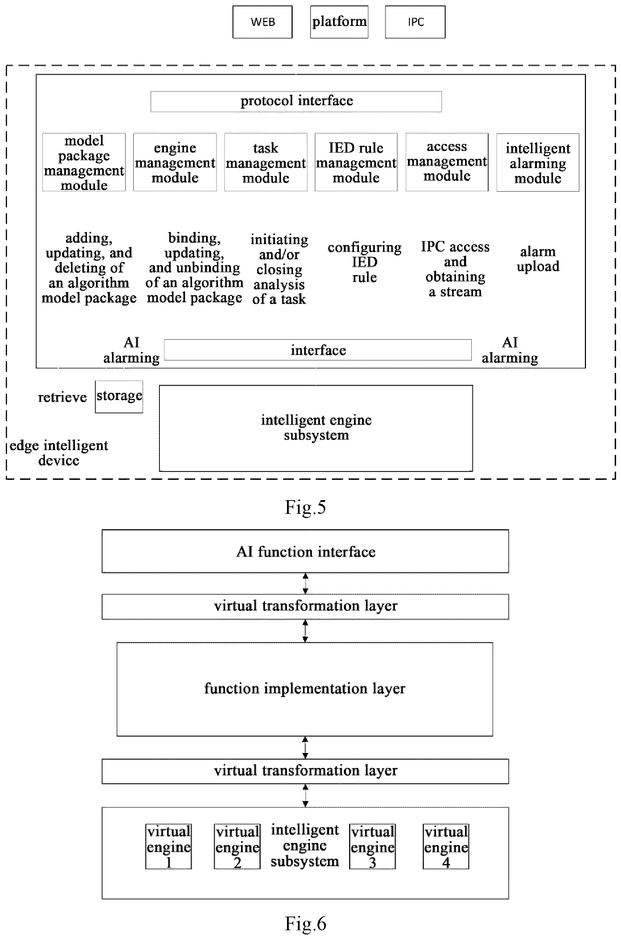

On the edge intelligent device side, Fig.5 is a schematic diagram of the structure of the edge intelligent device according to the embodiment of the present application. As shown in Fig.5, the edge intelligent device interacts with the platform (i.e. the industry integrated application platform) and an network camera (IPC) through an protocol interface, and the intelligent engine subsystem of the edge intelligent device is configured for managing virtual engines. Multiple modules for management are included between the intelligent engine subsystem and the protocol interface, including: a model package management module configured for adding, updating, and deleting of a model package (i.e. an algorithm model); an engine management module configured for binding, updating, and unbinding of a model package; a task management module for initiating and/or closing of a task, etc.; a rule management module configured for configuring a rule (which is a rule used by each algorithm model to perform a corresponding calculation based on the rule); an IPC access management module configured for managing an accessed IPC and obtaining a video stream from the IPC, etc.; an intelligent alarming module configured for uploading an alarm.

Based on Fig.4 and Fig.5, the edge intelligent device can be accessed through the platform (i.e. the industry integrated application platform) and WEB, and an operation such as adding, updating, and deleting of an algorithm model, binding/unbinding of an engine to a model, issuing a task and rule and the like, is performed in the edge intelligent device. The platform adds an algorithm model to a model storage partition of the device, and loads the algorithm model into the virtual engine for running when the algorithm model is bound to the virtual engine. The platform can issue a task and rule to notify the virtual engine to perform corresponding intelligent analysis of the algorithm model. The IPC access management module accesses to the front-end IPC, and obtains a video stream or a picture in real-time and sends it to the intelligent engine subsystem. The intelligent engine subsystem intelligently analyzes a result obtained after the virtual engine analyzes the algorithm model, and reports the alarm to the platform.

On the edge intelligent device side, the intelligent engine subsystem is configured for managing virtual engines. For an algorithm model, in terms of usage configuration, an algorithm model is bound to a physical engine. In this embodiment, multiple virtual engines are virtualized from the physical engine by internal software encapsulation of the physical engine, such a processing manner is similar to multiple logical operation cores of a CPU. Every time the platform makes a request, the edge intelligent device converts the received engine information into a virtual engine unit corresponding to an actual internal physical engine, and completes the corresponding action. The advantage of this design is that it allows for quick docking with the platform without the need to modify external interface logic.

The binding of a virtual engine to an algorithm model can be implemented through multiple methods. For example, the following binding method is provided in this embodiment: each time after an algorithm model is loaded in a physical engine, creating a model handle corresponding to the loaded algorithm model; obtaining identification information (referred to as ID for short) of a virtual engine to be bound with the loaded algorithm model; establishing a correspondence between the model handle corresponding to the loaded algorithm model and the identification information, to bind the loaded algorithm model to the virtual engine corresponding to the identification information.

This binding method can be understood as supporting the simultaneous loading of multiple algorithm models. Each time after an algorithm model is loaded in the physical engine, a model handle is created, and the model handle is associated with ID of the virtual engine. In this way, operations of the application layer for an algorithm model of a single virtual engine, such as rule configuration, video streaming, picture sending and the like, can be sent to the corresponding algorithm model for analysis thorough the association of ID of the virtual engine with the algorithm model, so as to realize the virtualization of a single physical engine, and mixed running of multiple algorithm models.

Through the above binding method, after multiple virtual engines have been simulated in a single physical engine, multiple algorithm models can be loaded by simulating the multiple virtual engines, so that the multiple algorithm model functions can all run in a single physical engine.

Fig.6 is a schematic diagram of the architecture of a single-physical engine and multi-algorithm according to an embodiment of the present application. As shown in Fig.6, the architecture mainly includes an AI function interface (for configuring an algorithm model, binding an algorithm model to a virtual engine, etc.), an intelligent engine subsystem, a function implementation layer, and virtual transformation layers. The virtual transformation layers are between the AI function interface and the function implementation layer of the edge intelligent device, and between the intelligent engine subsystem and the function implementation layer of the edge intelligent device, to perform the transformation between a physical engine and a virtual engine, as well as the interaction of a protocol and data. The intelligent engine subsystem virtualizes four virtual engines (or other numbers of virtual engines) from a single physical engine, and can simultaneously load and run different algorithm models for intelligent analysis. After each virtual engine is loaded with an algorithm model, a unique operation handle will be created for the current algorithm model. Subsequent model rule configuration and data interaction will be performed for the single handle, so the algorithm model can be associated with the virtual engine. Before engine virtualization, the edge intelligent device has only one physical engine and can run only one algorithm model at the same time. Fig.6 shows changing the software architecture implementation without changing the hardware architecture, which can quickly perform analysis of single-physical engine and multi-algorithm model, expand product application scenarios, reduce product prices, and enhance product competitiveness.

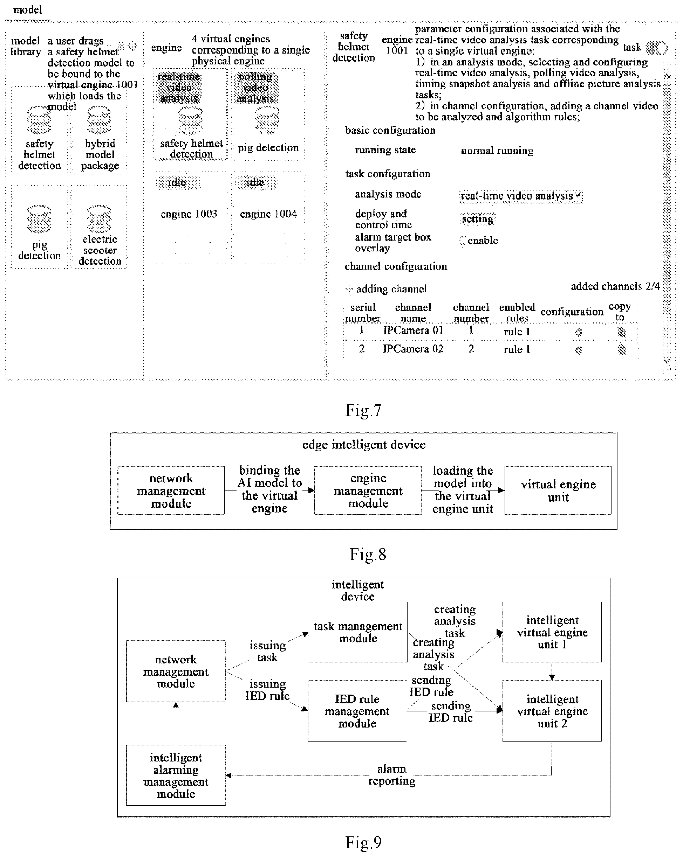

In order to facilitate the binding of a virtual engine to an algorithm model, a software interface for binding can be provided, in which binding can be done by dragging. In this optional method, an operation signal can be obtained, such as receiving an operation signal from a user, wherein the operation signal is configured for dragging a first object representing the algorithm model from a first display area to a second display area, the first display area displays at least one first object, each first object corresponding to one algorithm model, and the second display area displays at least one second object, each second object corresponding to one virtual engine; in response to the operation signal, in case that an overlap degree between the first object and a predetermined second object in the second display area exceeds a threshold, an algorithm model corresponding to the first object is bound to an virtual engine corresponding to the predetermined second object. Fig.7 is a schematic diagram of software configuration according to an embodiment of the present application. Fig.7 shows an AI configuration page, through which an algorithm model can be configured in a virtual engine. In Fig.7, a safety helmet detection model in the model library can be dragged to the virtual engine (or referred to as a virtual engine unit) 1001, that is, the safety helmet detection model is bound to the virtual engine 1001, and a pig detection model can be dragged to the virtual engine 1002, that is, the pig detection model is bound to the virtual engine 1002. The engines displayed to the user in Fig.7 are all virtual engines, and a single algorithm model can be bound to a virtual engine corresponding to a physical engine by dragging. For example, the safety helmet detection model can be bound to virtual engine 1001, the pig detection model can be bound to virtual engine 1002, the electric scooter detection model can be bound to virtual engine 1003, and the fire escape occupancy detection model can be bound to virtual engine 1004. In this way, a single physical engine can enable multiple algorithm models to perform intelligent analysis simultaneously.

In Fig.7, the task corresponding to each virtual engine can also be configured. For example, real-time video analysis, polling video analysis, timing picture analysis, offline picture analysis, etc. can be selected in the analysis mode. The channel for analysis can also be selected, for example, selecting IPCamera01 or IPCamera02 channel. In Fig.7, it can also display whether the running status of the algorithm model in each virtual engine is normal.

Fig.8 is a schematic diagram of the internally binding of a virtual engine in an edge intelligent device according to an embodiment of the present application. As shown in Fig.8, after the platform issues a protocol for binding a model to an engine, the network management module parses protocol content and notifies the engine management module to bind an AI model (i.e. algorithm model) to a virtual engine unit (i.e. virtual engine). The engine management module issues an instruction for an engine to be load with a model to the intelligent engine subsystem to load the algorithm model to a designated idle virtual engine.

After binding, a task can also be configured for the algorithm model. For example, in the safety helmet detection model, its task can be configured as real-time video analysis, and a channel for the real-time video analysis can be added. In Fig.7, channels 1 and 2 are configured for real-time video analysis.

Fig.9 is a schematic diagram of the edge intelligent device issuing a task and rule according to an embodiment of the present application. As shown in Fig.9, the platform issues a task and a parameter required for executing the task (for example, the parameter can be carried in the rule) to an engine. The device internally parses the protocol and issues it to the task management module and the rule management module through the network management module. The task management module issues different tasks to different virtual engine units (i.e. virtual engines) respectively, and the rule management module issues different rules to different virtual engine units respectively. Each virtual engine unit start an analysis of task and performs intelligent analysis of a video and a picture according to different rules. The analysis result are reported to the platform through the intelligent alarming management module. For example, during the safety helmet detection process, an alarming condition can be pre-configured: if it is detected that no safety helmet is worn, then an alarm will be issued; after analysis, if it is found that the safety helmet is not worn, it is determined that an alarm is needed.

Different algorithm models can be loaded in different virtual engines, and various algorithm models can be combined to achieve analysis of multiple scenarios. That is, a pre-configured predetermined order can be obtained, wherein the predetermined order is configured for indicating a running order of multiple algorithm models in coordination with each other in case that the multiple algorithm models run in coordination with each other to execute the task; based on the predetermined order, the multiple algorithm models that run in coordination with each other are sequentially run in multiple virtual engines corresponding to the multiple algorithm models, to execute the task. During running multiple algorithm models to execute the task, an output of an algorithm model that runs firstly is used as an input of an algorithm model that runs later.

For example, if the virtual engine 1 detects an image of a designated part, it can send the image of the designated part to the virtual engine 2 for further image comparison to confirm which user it is. Alternatively, if the virtual engine 1 detects the user's behavior, it can send the image to the virtual engine 2 for further image comparison to confirm which user's behavior it is. Multiple application scenarios are expanded from simple AI detection, classification, and hybrid model analysis to meet customer needs.

The task that can be configured in Fig.7 includes a video analysis task and a picture analysis task. The video analysis task can include a real-time video analysis task, a polling video analysis task, etc. The picture analysis task can include a timing snapshot analysis task, an offline picture analysis task, etc. These tasks are described below respectively.

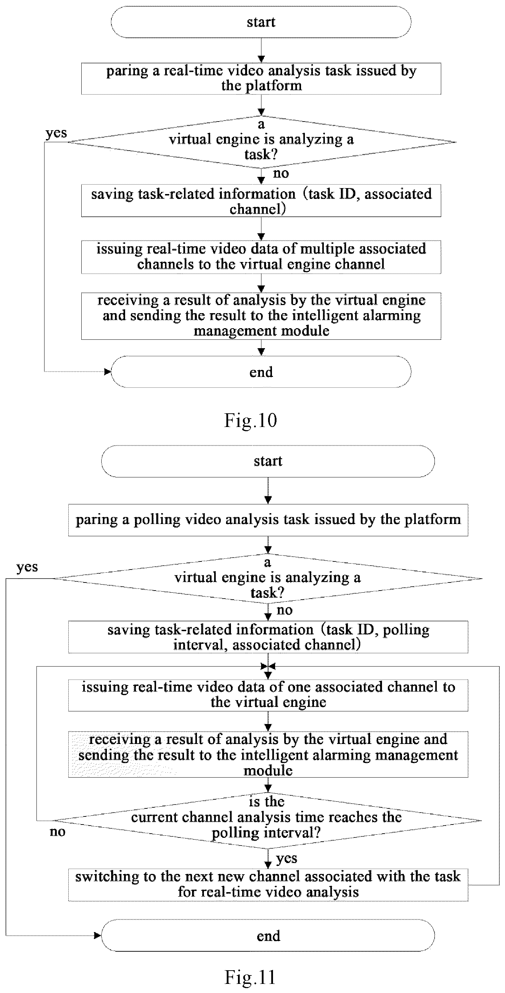

Fig.10 is a flow chart of a real-time video analysis task according to the embodiment of the present application. As shown in Fig. 10, it includes: paring a real-time video analysis task issued by the platform; if a virtual engine is analyzing a task, ending the process; if the virtual engine is not analyzing a task, saving task-related information (for example, task ID, associated channel); issuing real-time video data of multiple associated channels to the virtual engine; receiving a result of analysis by the virtual engine and sending the result to the intelligent alarming management module.

Fig.11 is a flowchart of a polling video analysis task according to the embodiment of the present application. As shown in Fig. 11, it includes: paring a polling video analysis task issued by the platform; if a virtual engine already is analyzing a task, ending the process; if the virtual engine is not analyzing a task, saving task-related information (for example, task ID, polling interval, associated channel), issuing real-time video data of one associated channel to the virtual engine; receiving a result of analysis by the virtual engine and sending the result to the intelligent alarming management module; determining whether a current channel analysis time reaches the polling interval; if the polling interval is reached, switching to a next new channel associated with the task for real-time video analysis.

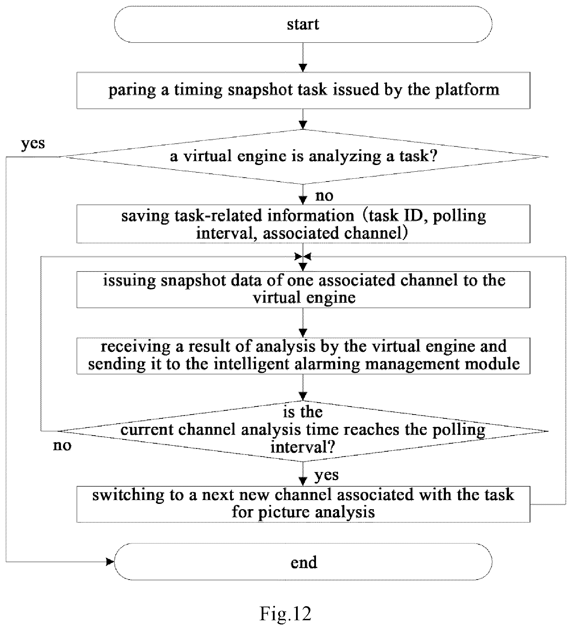

Fig.12 is a flow chart of a timing snapshot analysis task according to the embodiment of the present application. As shown in Fig. 12, it includes: paring a timing snapshot task issued by the platform; if a virtual engine already is analyzing a task, ending the process; if the virtual engine is not analyzing a task, saving task-related information (for example, task ID, polling interval, associated channel); issuing snapshot data of one associated channel to the virtual engine; receiving a result of analysis by the virtual engine and sending it to the intelligent alarming management module; determining whether a current channel analysis time reaches the polling interval; if the polling interval is reached, switching to a next new channel associated with the task for picture analysis.

It should be noted that since the virtual engine is virtually obtained in the physical engine, the performance of each virtual engine in multiple virtual engines can be limited based on the performance of the physical engine when the task is executed in the multiple virtual engines, wherein the performance here is configured for indicating the upper limit of a processing capacity of the engine, i.e., the performance of the physical engine is configured for indicating the upper limit of the processing capability of the physical engine, and the performance of the virtual engine is configured for indicating the upper limit of the processing capability of the virtual engine, wherein a sum of performances of the multiple virtual engines during running does not exceed the performance of the physical engine. For example, for a video analysis task, the performance of the physical engine is to support up to N channels of video analysis, wherein N is a positive integer. Or, for a picture analysis task, the performance of the physical engine is to analyze up to M pictures per unit time, wherein M is a positive integer. Under this request, the total number of channels of video analysis supported by all virtual engines cannot exceed N, and the total number of pictures analyzed by all virtual engines per unit time cannot exceed M.

At this time, optionally, in case that the multiple virtual engines all perform video analysis, the sum of the number of video channels enabled by the multiple virtual engines is limited to be less than or equal to N; or, in case that the multiple virtual engines all perform picture analysis, the sum of the number of pictures analyzed by the multiple virtual engines per unit time is limited to be less than or equal to M.

Below is an example to illustrate. In this example, a single physical engine supports up to 4 channels of real-time video analysis performance. Since the virtual engine is virtually obtained on the basis of the physical engine, in case that the total computing resources of a single physical engine are 4 channels of real-time video analysis, if only one virtual engine is running, then the total computing resources of this single virtual engine are also 4 channels; if four virtual engines are running, the sum of computing resources of the 4 virtual engines corresponding to the physical engine are also 4 channels. At this time, the computing resources of the four virtual engines can be dynamically adjusted. For example, if virtual engine 1 is bound to algorithm model 1 and enables one channel of real-time video analysis, then algorithm model 2 bound to virtual engine 2 can further enable 3 channels of real-time video analysis. If virtual engine 1 enables 4 channels of real-time video analysis, then other virtual engines cannot enable real-time video analysis anymore, because the total computing resources of all virtual engines for the single physical engine have already used 4 channels; and at this point, if a channel of real-time video analysis is enabled additionally, a "insufficient engine resources" prompt will be given.

For the task issued by the platform to various virtual engines, when the real-time video analysis task associates with one channel, one channel of real-time video analysis performance is occupied. Since the polling video analysis task performs a signal channel of real-time video analysis through polling based on associated channels and only enables one channel of real-time video analysis at the same time, the polling video task only occupies one channel of real-time video analysis performance regardless of how many channels are associated with the polling video analysis task. The single physical engine supports offline picture analysis with a performance of 16 pictures per second, which is mutually exclusive with real-time video analysis performance. In other words, if 4 channels of real-time video analysis are enabled, the offline picture analysis cannot be performed anymore. The above performance limitations are all for a single physical engine. In the new intelligent analysis solution, a single physical engine needs to be encapsulated and four virtual engines need to be virtualized from the single physical engine. The performance limitation on each task of a single virtual engine is the same as that of the physical engine, and the total analysis performance of the four virtual engines corresponding to the physical engine is the same as that of a single physical engine. For example, after virtual engine 1 enables four channels of real-time video analysis, the other three virtual engines cannot enable real-time video analysis or picture analysis anymore. If virtual engine 1 enables one channel of real-time video analysis, and virtual engine 2 enables two channels of real-time video analysis, then virtual engine 3 can further enable one channel of real-time video analysis, and the total number of channels of real-time video analysis enabled by the four virtual engines are 4 channels.

Another possibility is that different virtual engines perform different tasks. For example, some virtual engines are configured for performing video analysis while others are configured for performing picture analysis. In this case, limiting the performance of each virtual engine in multiple virtual engines based on the performance of the physical engine also includes: when some virtual engines in the multiple virtual engines perform video analysis while the other virtual engines perform picture analysis, the some virtual engines enable N1 video channels, and the maximum number of pictures analyzed per unit time by the other virtual engines (i.e., at least one virtual engine for performing picture analysis) is limited to: an equivalent picture processing number * (N-N1), wherein N1 is less than N and is greater than or equal to 0, N1 is the number of video channels enabled by the virtual engines for performing video analysis. When N1=0, all virtual engines are configured for performing picture analysis. The equivalent picture processing number refers to the number of pictures that can be analyzed when a capacity to process one channel of video analysis is used for performing picture analysis. Optionally, the equivalent picture processing number can be calculated based on M and N, for example, the equivalent picture processing number can be M/q*N, for example, rounding up M/q*N or rounding down M/q*N; wherein, q is the configured control coefficient, and has a value in the range of 1 to M/N. For example, the value of q can be configured based on experience, as long as it is between 1 and M/N. If q is 1, the equivalent picture processing number can be M/N, and if q is M/N, the equivalent picture processing number can be 1, which means that the equivalent picture processing number is a value between 1 and M/N.

In another alternative implementation, in order to ensure that the virtual engine's capacity to analyze pictures does not exceed the limit of the physical engine's capacity, a speed of sending pictures to the other virtual engines can also be controlled based on a delay time, so as to limit the maximum number of pictures analyzed per unit time by the other virtual engines to: the equivalent picture processing number * (N-N1), wherein the delay time is configured for indicating the time interval between sending two pictures, and the delay time is: the unit time/[the equivalent picture processing number * (N-N1)].

In this optional implementation, the speed of sending pictures to the other virtual engines can be controlled through a picture scheduling task (such as an offline picture scheduling task, which is taken as an example in the following description). An offline picture scheduling task can be configured, wherein the offline picture scheduling task is configured for sequentially sending a picture to each virtual engine in the at least one virtual engine for performing picture analysis; the offline picture scheduling task is controlled to send one picture every predetermined time (i.e., the delay time), so as to limit the maximum number of pictures analyzed per unit time by the at least one virtual engine for performing picture analysis to: the equivalent picture processing number * (N-N1), wherein the predetermined time is configured for indicating the time interval between sending two pictures, and the predetermined time is: the unit time/[the equivalent picture processing number * (N-N1)].

The following will be descripted with an example. In this example, as long as the physical engine has remaining real-time video analysis performance and an idle virtual engine, the offline picture task for the virtual engine are allowed to be enabled. For example, for a single physical engine, it is necessary to ensure that virtual engine 1 enables 3 channels of real-time video analysis, and the other three virtual engines can also enable the offline picture task. Assuming that a single physical engine can support up to 4 channels of real-time video analysis or an analysis performance of 16 pictures per second, it can be derived that 1 channel of real-time video analysis performance corresponds to an offline picture analysis performance of 4 pictures/second. Therefore, when 4 virtual engines of the single physical engine enable the real-time video analysis task and offline picture analysis task, it is necessary to dynamically adjust the speed of sending offline pictures to the virtual engines, to meet the remaining picture analysis performance of the physical engine. In fact, there are two situations:
Situation 1: 3 virtual engines are configured for real-time video analysis, and 1 virtual engine is configured for offline picture analysis. Virtual engines 1, 2 and 3 each enable one channel of real-time video analysis, which occupies three channels of real-time video analysis performance. Correspondingly, there is still one channel of real-time video analysis performance left in the physical engine, which corresponds to picture analysis performance of 4 pictures/second. Therefore, virtual engine 4 can still enable the offline picture analysis task, but the performance of this picture analysis task needs to be limited to 4 pictures/second.

Situation 2: all 4 virtual engines are configured for the offline picture analysis, and each of the 4 virtual engines enables the offline picture analysis task, which means that the 4 offline picture tasks collectively occupy the analysis performance of 16 pictures/second.

For the above two situations, it is necessary to adjust the speed of sending offline pictures for the virtual engine to the virtual engine in case of one offline picture task in the situation 1, and it is necessary to solve the speed of sending offline pictures to each virtual engine in sequence for each of the four offline picture tasks in case of the four offline picture tasks in the situation 2, as well as the situation in which the four offline picture tasks occupy resources and the occupied picture analysis performance of each virtual engine is uneven.

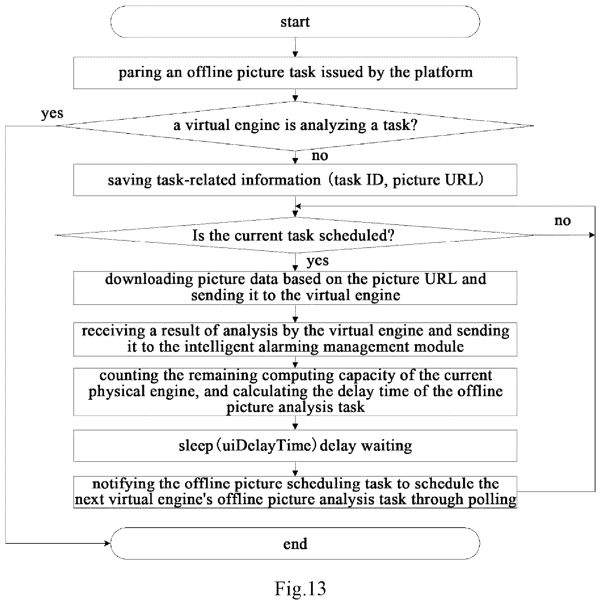

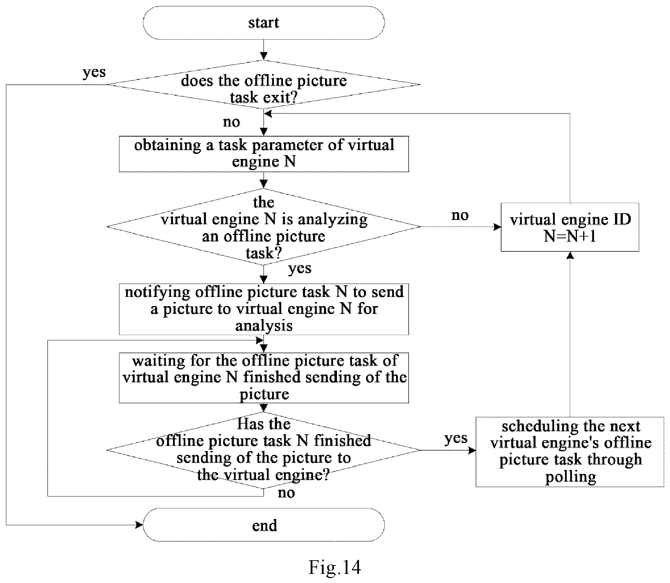

Fig.13 is a flowchart of an offline picture analysis task according to an embodiment of the present application, and Fig.14 is a flowchart of an offline picture scheduling task according to an embodiment of the present application. As shown in Figs. 13 and 14, when multiple offline picture tasks are enabled and jointly occupy the picture analysis performance of a single physical engine, if an offline picture scheduling task needs to be added, an offline picture task of each virtual engine can be scheduled through polling to send a picture to the virtual engine. Furthermore, when sending offline pictures, the offline picture task dynamically adjusts the delay time uiDelayTime to control the speed of sending pictures, in order to prevent the problem of insufficient picture analysis performance of the virtual engine caused by the multiple offline picture tasks sending too many pictures, and simultaneously prevent the situation where when the multiple offline picture tasks start to send pictures after waiting for a delay, one offline picture task keeps occupying CPU resources to start sending pictures, while other offline picture tasks remain in a waiting state. After such polling based on the delay time slice, the running situation is as follows: the scheduling task notifies offline picture task 1 to send a picture, while other offline picture tasks wait for a delay; offline picture task 1 starts waiting for a delay after complementing the picture sending; after the delay, the offline picture scheduling task is notified to schedule offline picture task 2 of the next virtual engine through polling, to notify offline picture task 2 to send the picture; offline picture task 2 preemptively sends the picture, and other offline picture tasks wait for a delay; subsequently, each task will be scheduled through polling in sequence.

The delay time uiDelayTime of offline picture task, is calculated based on the remaining real-time video analysis performance of a single physical engine, and the calculation principle is as follows:
a) iUsedChanNum is the counted number of occupied real-time video analysis channels of the single physical engine;
a) iResChanNum = 4 - iUsedChanNum, is the number of remaining real-time video analysis channels of the single physical engine;
c) iResAnalysePicNum = iResChanNum * 4, is the remaining picture analysis performance of the single physical engine (1 channel of the real-time video analysis performance corresponds to a picture analysis performance of 4 pictures/s).
d) uiDelayTime =1 second/iResAnalysePicNum, is the delay time for sending pictures by multiple offline picture tasks corresponding to the single physical engine, and is in seconds, ensuring the remaining picture analysis performance of the single physical engine, iResAnalysePicNum pictures/s. If the above uiDlelayTime is measured in seconds, its value may be relatively small. In an optional implementation, microseconds (1 second equals 1000000 microseconds) can be used as the unit of uiDelayTime. At this time, uiDelayTime = 1000000 (microseconds)/iResAnalysePicNum, which is the delay time for multiple offline picture tasks corresponding to a single physical engine to send pictures, and is in microseconds.

With the above embodiments, the software architecture implementation is changed without changing the hardware architecture. By using a single-engine and multi-algorithm solution, the physical engine is encapsulated and multiple virtual engines are virtualized from the physical engine, which can quickly perform single-physical engine and multi-algorithm analysis, expand product application scenarios, reduce product prices, and enhance product competitiveness. Furthermore, the virtual engines are loaded with different algorithm models, enabling to perform fusion intelligent analysis on the same channel of video. For example, if virtual engine 1 detects a designated part, it can send the image of the designated part to virtual engine 2 for further image comparison to confirm which user it is. Multiple application scenarios are expanded from simple AI detection, classification, and hybrid model analysis, to meet customer needs.

In the above embodiments, by polling based on time slice and dynamically adjusting the speed of picture sending, it ensures that a single physical engine can enable multiple offline picture tasks for picture analysis, meeting the current engine's picture analysis performance.

In the present embodiment, it is provided an edge intelligent device including a memory and a processor, wherein the memory has a computer program stored therein, and the processor is configured to run the computer program to execute the methods described in the above embodiments.

The above program can run in a processor or be stored in a memory (also known as a computer-readable medium). The computer-readable medium includes permanent and non-permanent, removable and non-removable media. Information storage can be achieved by any method or technology. The information can be computer readable instructions, data structures, modules of programs, or other data. Examples of storage media of the computer include, but are not limited to, phase change memory (PRAM), static random access memory (SRAM), dynamic random access memory (DRAM), other types of random access memory (RAM), read-only memory (ROM), electrically erasable programmable read-only memory (EEPROM), flash memory or other memory technologies, read-only optical disc read-only memory (CD-ROM), digital versatile disc (DVD) or other optical storage, magnetic tape cartridges, magnetic tape storage or other magnetic storage devices, or any other non-transmission medium that can be used for storing information that can be accessed by computing devices. According to the definition herein, the computer readable medium does not include temporary computer-readable media (transitory media), such as modulated data signals and carriers.

These computer programs can also be loaded onto a computer or other programmable data processing device, so that a series of operating steps can be executed in the computer or other programmable device to generate the processing implemented by the computer, so that instructions executed in the computer or other programmable device provide steps for implementing the functions specified in one or multiple flows in a flow chart and/or a block or multiple blocks of a block diagram, the corresponding different steps can be implemented by different modules.

The present embodiment provides such apparatus or system. The apparatus is referred to as an algorithm model running and processing apparatus, including: a first obtaining module, configured for obtaining at least one algorithm model, wherein the algorithm model is an artificial intelligence algorithm model; a second obtaining module, configured for obtaining multiple virtual engines, wherein the virtual engines are engines virtualized from a physical engine after software encapsulation of the physical engine, the number of the obtained virtual engines is greater than or equal to the number of the obtained algorithm models; a binging module, configured for binding each algorithm model in the at least one algorithm model to a virtual engine and running the algorithm model in the virtual engine, wherein one virtual engine is configured to be bound with one algorithm model; an executing module, configured for receiving a task, and executing the task in the virtual engine with the algorithm model.

The system or apparatus is configured for implementing the functions of the methods in the above embodiments. Each module in the system or apparatus corresponds to each step in the methods. Tt has been described in the methods, thus it will not be repeated here.

For example, the system or apparatus further includes: an alarming module, configured for obtaining a analysis result obtained after the virtual engine after executing the task with the algorithm model; determining whether an alarm needs to be sent for the analysis result based on a pre-configured alarming condition, and if so, sending an alarm.

For another example, the executing module is configured for obtaining a pre-configured predetermined order, wherein the predetermined order is configured for indicating a running order of multiple algorithm models in case that the multiple algorithm models run in coordination with each other to execute the task; based on the predetermined order, sequentially running the multiple algorithm models in multiple virtual engines corresponding to the multiple algorithm models to execute the task; wherein during running the multiple algorithm models to execute the task, an output of an algorithm model that runs firstly is used as an input of an algorithm model that runs later.

For another example, the system or apparatus further includes: a limiting module, configured for limiting a performance of each virtual engine in the multiple virtual engines based on a performance of the physical engine in case of executing the task in the multiple virtual engines, wherein the performance of the physical engine is configured for indicating an upper limit of a processing capability of the physical engine, and the performance of the virtual engine is configured for indicating an upper limit of a processing capability of the virtual engine, wherein a sum of performances of the multiple virtual engines during running does not exceed the performance of the physical engine.

Optionally, the task includes a video analysis task and/or a picture analysis task; wherein, for the video analysis task, the performance of the physical engine is to support up to N channels of video analysis, wherein N is a positive integer; for the picture analysis task, the performance of the physical engine is to analyze up to M pictures per unit time, wherein M is a positive integer.

Optionally, the limiting module is configured for limiting a sum of the number of video channels enabled by the multiple virtual engines to be less than or equal to N in case that the multiple virtual engines all perform video analysis; or limiting a sum of the number of pictures analyzed per unit time by the multiple virtual engines to be less than or equal to M in case that the multiple virtual engines all perform picture analysis; or limiting the maximum number of pictures analyzed per unit time by the at least one virtual engine for performing picture analysis to: an equivalent picture processing number * (N-N1), wherein N1 is less than N, and is greater than or equal to 0, N1 is the number of video channels enabled by the virtual engine for performing video analysis, and the equivalent picture processing number is the number of pictures that can be analyzed when a capacity to process one channel of video analysis is used for performing picture analysis.

Optionally, the limiting module is configured for configuring a picture scheduling task, wherein the picture scheduling task is configured for sequentially sending a picture to each virtual engine in the at least one virtual engine for performing picture analysis; controlling the picture scheduling task to send a picture every predetermined time, so as to limit the maximum number of pictures analyzed per unit time by the at least one virtual engine for performing picture analysis to: the equivalent picture processing number * (N-N1), wherein the predetermined time is configured for indicating a time interval between sending two pictures, and the predetermined time is: the unit time/[the equivalent picture processing number * (N-N1)].

Optionally, the equivalent picture processing number is: M/q*N; wherein, q is a configured control coefficient, and has a value in a range of 1 to M/N.

For another example, the binding module is further configured for obtaining an operation signal, wherein the operation signal is configured for dragging a first object representing an algorithm model from a first display area to a second display area, the first display area displays at least one first object, each first object corresponding to one algorithm model, the second display area displays at least one second object, each second object corresponding to one virtual engine; in response to the operation signal, in case that an overlap degree between the first object and a predetermined second object in the second display area exceeds a threshold, binding an algorithm model corresponding to the first object to an virtual engine corresponding to the predetermined second object.

Optionally, the binding module is configured for creating, each time after an algorithm model is loaded in the physical engine, a model handle corresponding to the loaded algorithm model; obtaining identification information of a virtual engine to be bound to the loaded algorithm model; establishing a correspondence between the model handle corresponding to the loaded algorithm model and the identification information, to bind the loaded algorithm model to the virtual engine corresponding to the identification information.

With the above embodiments, the simultaneous analysis scenario that requires support from multiple algorithm models can be implemented in the edge intelligent device (which can be the edge intelligent device with one physical engine), thereby the multiple algorithm models can run simultaneously in the edge intelligent device, meeting the requirements of low-cost and multi algorithm model fusion analysis.

The above are only embodiments of the present application and are not used for limiting the present application. For those skilled in the art, the present application can have various changes and variations. Any modification, equivalent replacement, improvement, etc. made within the spirit and principles of the present application shall be included in the scope of the claims of the present application.

## Claims

1. An algorithm model running and processing method, comprising:
obtaining at least one algorithm model, wherein the algorithm model is an artificial intelligence algorithm model;
obtaining multiple virtual engines, wherein the virtual engines are engines virtualized from a physical engine after software encapsulating of the physical engine, and the number of the obtained virtual engines is greater than or equal to the number of the obtained algorithm models;
binding each algorithm model in the at least one algorithm model to a virtual engine and running the algorithm model in the virtual engine, wherein one virtual engine is configured to be bound with one algorithm model;
receiving a task and executing the task in the virtual engine with the algorithm model.

2. The method according to claim 1, wherein executing the task in the virtual engine with the algorithm model comprises:
obtaining a pre-configured predetermined order, wherein the predetermined order is configured for indicating a running order of multiple algorithm models in case that the multiple algorithm models run in coordination with each other to execute the task;
based on the predetermined order, sequentially running the multiple algorithm models in multiple virtual engines corresponding to the multiple algorithm models to execute the task, wherein during running the multiple algorithm models to execute the task, an output of an algorithm model that runs firstly is used as an input of an algorithm model that runs later.

3. The method according to claim 1, wherein the method further comprises:
limiting a performance of each virtual engine in the multiple virtual engines based on a performance of the physical engine in case that the task is executed in the multiple virtual engines, wherein the performance of the physical engine is configured for indicating an upper limit of a processing capability of the physical engine, and the performance of the virtual engine is configured for indicating an upper limit of a processing capability of the virtual engine, wherein a sum of performances of the multiple virtual engines during running does not exceed the performance of the physical engine.

4. The method according to claim 3, wherein the task comprises a video analysis task and/or a picture analysis task, wherein, for the video analysis task, the performance of the physical engine is to support up to N channels of video analysis, wherein N is a positive integer; for the picture analysis task, the performance of the physical engine is to analyze up to M pictures per unit time, wherein M is a positive integer.

5. The method according to claim 4, wherein limiting the performance of each virtual engine in the multiple virtual engines based on the performance of the physical engine comprises:
in case that the multiple virtual engines all perform video analysis, limiting a sum of the number of video channels enabled by the multiple virtual engines to be less than or equal to N; or,
in case that the multiple virtual engines all perform picture analysis, limiting a sum of the number of pictures analyzed per unit time by the multiple virtual engines to be less than or equal to M; or,
limiting the maximum number of pictures analyzed per unit time by at least one virtual engine for performing picture analysis to: an equivalent picture processing number * (N-N1), wherein N1 is less than N, and is greater than or equal to 0, N1 is the number of video channels enabled by a virtual engine for performing video analysis, and the equivalent picture processing number is the number of pictures that can be analyzed when a capacity to process one channel of video analysis is used for performing picture analysis.

6. The method according to claim 5, wherein limiting the maximum number of pictures analyzed per unit time by the at least one virtual engine for performing the picture analysis to:
the equivalent picture processing number * (N-N1), comprises:
configuring a picture scheduling task, wherein the picture scheduling task is configured for sequentially sending a picture to each virtual engine in the at least one virtual engine for performing picture analysis;
controlling the picture scheduling task to send one picture every predetermined time, so as to limit the maximum number of pictures analyzed per unit time by the at least one virtual engine for performing picture analysis to: the equivalent picture processing number * (N-N1), wherein the predetermined time is configured for indicating a time interval between sending two pictures, and the predetermined time is: the unit time/[the equivalent picture processing number * (N-N1)].

7. The method according to claim 5 or 6, wherein the equivalent picture processing number is M/q*N; q is a configured control coefficient, and has a value in a range of 1 to M/N.

8. The method according to any one of claims 1-6, wherein after executing the task in the virtual engine with the algorithm model, the method further comprises:
obtaining an analysis result obtained after the virtual engine executes the task with the algorithm model;
determining whether an alarm needs to be sent for the analysis result based on a pre-configured alarming condition, and if so, sending an alarm.

9. The method according to any one of claims 1-6, wherein binding each algorithm model in the at least one algorithm model to a virtual engine and running the algorithm model in the virtual engine, comprises:
obtaining an operation signal, wherein the operation signal is configured for dragging a first object representing an algorithm model from a first display area to a second display area, the first display area displays at least one first object, each first object corresponding to one algorithm model, and the second display area displays at least one second object, each second object corresponding to one virtual engine;
in response to the operation signal, in case that an overlap degree between the first object and a predetermined second object in the second display area exceeds a threshold, binding an algorithm model corresponding to the first object to an virtual engine corresponding to the predetermined second object.

10. The method according to any one of claims 1-6, wherein binding each algorithm model in the at least one algorithm model to a virtual engine and running the algorithm model in the virtual engine, comprises:
each time after an algorithm model is loaded in the physical engine, creating a model handle corresponding to the loaded algorithm model;
obtaining identification information of a virtual engine to be bound with the loaded algorithm model;
establishing a correspondence between the model handle corresponding to the loaded algorithm model and the identification information, to bind the loaded algorithm model to the virtual engine corresponding to the identification information.

11. An algorithm model running and processing apparatus, comprising:
a first obtaining module, configured for obtaining at least one algorithm model, wherein the algorithm model is an artificial intelligence algorithm model;
a second obtaining module, configured for obtaining multiple virtual engines, wherein the virtual engines are engines virtualized from a physical engine after software encapsulating of the physical engine, and the number of the obtained virtual engines is greater than or equal to the number of the obtained algorithm models;
a binding module, configured for binding each algorithm model in the at least one algorithm model to a virtual engine and running the algorithm model in the virtual engine, wherein one virtual engine is configured to be bound with one algorithm model;
an executing module, configured for receiving a task and executing the task in the virtual engine with the algorithm model.

12. The apparatus according to claim 11, wherein
the executing module is configured for obtaining a pre-configured predetermined order, wherein the predetermined order is configured for indicating a running order of multiple algorithm models in case that the multiple algorithm models run in coordination with each other to execute the task; sequentially running, based on the predetermined order, the multiple algorithm models in multiple virtual engines corresponding to the multiple algorithm models to execute the task; wherein during running the multiple algorithm models to execute the task, an output of an algorithm model that runs firstly is used as an input of an algorithm model that runs later; and/or,
the apparatus further comprises a limiting module, configured for limiting a performance of each virtual engine in the multiple virtual engines based on a performance of the physical engine in case that the task is executed in the multiple virtual engines, wherein the performance of the physical engine is configured for indicating an upper limit of a processing capability of the physical engine, and the performance of the virtual engine is configured for indicating an upper limit of a processing capability of the virtual engine, wherein a sum of performances of the multiple virtual engines during operation does not running the performance of the physical engine; and/or,
the task comprises a video analysis task and/or a picture analysis task; wherein, for the video analysis task, the performance of the physical engine is to support up to N channels of video analysis, wherein N is a positive integer; for the picture analysis task, the performance of the physical engine is to analyze up to M pictures per unit time, wherein M is a positive integer; and/or,
the limiting module is configured for limiting a sum of the number of video channels enabled by the multiple virtual engines to be less than or equal to N in case that the multiple virtual engines all perform video analysis; or limiting a sum of the number of pictures analyzed per unit time by the multiple virtual engines to be less than or equal to M in case that the multiple virtual engines all perform picture analysis; or limiting the maximum number of pictures analyzed per unit time by at least one virtual engine for performing picture analysis to:
an equivalent picture processing number * (N-N1), N1 is less than N, and is greater than or equal to 0, N1 is the number of video channels enabled by a virtual engine for performing video analysis, and the equivalent picture processing number is the number of pictures that can be analyzed when a capacity to process one channel of video analysis is used for performing picture analysis; and/or,
the limiting module is configured for configuring a picture scheduling task, wherein the picture scheduling task is configured for sequentially sending a picture to each virtual engine in the at least one virtual engine for picture performing analysis; controlling the picture scheduling task to send one picture every predetermined time, so as to limit the maximum number of pictures analyzed per unit time by the at least one virtual engine for performing picture analysis to: the equivalent picture processing number * (N-N1), wherein the predetermined time is configured for indicating a time interval between sending two pictures, and the predetermined time is: the unit time/[the equivalent picture processing number * (N-N1)]; and/or,
the equivalent picture processing number is M/q*N; q is a configured control coefficient, and has a value in a range of 1 to M/N; and/or,
the apparatus further comprises an alarming module, configured for obtaining an analysis result obtained after the virtual engine executes the task with the algorithm model; determining whether an alarm needs to be sent for the analysis result based on a pre-configured alarming condition, and if so, sending an alarm; and/or,
the binding module is further configured for obtaining an operation signal, wherein the operation signal is configured for dragging a first object representing an algorithm model from a first display area to a second display area, the first display area displays at least one first object, each first object corresponding to one algorithm model, and the second display area displays at least one second object, each second object corresponding to one virtual engine; in response to the operation signal, binding, in case that an overlap degree between the first object and a predetermined second object in the second display area exceeds a threshold, an algorithm model corresponding to the first object to an virtual engine corresponding to the predetermined second object; and/or,
the binding module is configured for creating, each time after an algorithm model is loaded in the physical engine, a model handle corresponding to the loaded algorithm model; obtaining identification information of a virtual engine to be bound with the loaded algorithm model; establishing a correspondence between the model handle corresponding to the loaded algorithm model and the identification information, to bind the loaded algorithm model to the virtual engine corresponding to the identification information.

13. An edge intelligent device, comprising a memory and a processor, wherein the memory is configured for storing a program, the processor is configured for running the program, and the program is configured for executing the method according to any one of claims 1-10.

14. An algorithm model running and processing system, comprising an edge intelligent device and an application platform, wherein a user logs into the application platform through a WEB page to manage the edge intelligent device; wherein:
the application platform is configured for obtaining at least one algorithm model from an AI open platform, and issuing the at least one algorithm model to the edge intelligent device, wherein the algorithm model is an artificial intelligence algorithm model;
the application platform is configured for managing the virtual engines of the edge intelligent device and processing a binding relationship between virtual engines and algorithm models; wherein, the virtual engines are engines virtualized from a physical engine after software encapsulating of the physical engine, and the number of obtained virtual engines is greater than or equal to the number of obtained algorithm models; the binding relationship between virtual engines and algorithm models is to bind each algorithm model to a virtual engine and run the algorithm model in the virtual engine, wherein one virtual engine is configured to be bound with one algorithm model;
the application platform is configured for issuing a task to the edge intelligent device;
the edge intelligent device is configured for receiving the task issued by the application platform and execute the task in the virtual engine with the algorithm model.

15. The system according to claim 14, wherein,
the edge intelligent device is configured for obtaining, after executing the task, an analysis result obtained after the virtual engine executes the task with the algorithm model, and returning the analysis result to the application platform,
the application platform is configured for determining whether an alarm needs to be sent for the analysis result based on a pre-configured alarming condition, and if so, sending an alarm.

16. The system according to claim 14, wherein the edge intelligent device comprises:
an intelligent engine subsystem, configured for managing the virtual engines;
a model package management module, configured for adding, updating, and deleting of an algorithm model;
an engine management module, configured for binding, updating, and unbinding of an algorithm model;
a task management module, configured for initiating and/or closing of a task;
a rule management module, configured for configuring a rule, which is a rule used by an algorithm model, to enable, based on the rule, the algorithm model to perform a calculation matching the rule;
an IPC access management module, configured for managing an accessed IPC and obtaining a video stream from the IPC;
an intelligent alarming module, configured for uploading an alarm.

17. The system according to claim 14, wherein the edge intelligent device, when executing the task in the virtual engine with the algorithm model, specifically is configured for:
obtaining a pre-configured predetermined order, wherein the predetermined order is configured for indicating a running order of multiple algorithm models in case that the multiple algorithm models run in coordination with each other to execute the task; based on the predetermined order, sequentially running the multiple algorithm models in multiple virtual engines corresponding to the multiple algorithm models to execute the task; wherein during running the multiple algorithm models to execute the task, an output of an algorithm model that runs firstly is used as an input of an algorithm model that runs later.

18. The system according to claim 14, wherein,
the edge intelligent device is further configured for limiting a performance of each virtual engine in the multiple virtual engines based on a performance of the physical engine in case that the task is executed in the multiple virtual engines, wherein the performance of the physical engine is configured for indicating an upper limit of a processing capability of the physical engine, and the performance of the virtual engine is configured for indicating an upper limit of a processing capability of the virtual engine, and a sum of performances of the multiple virtual engines during running does not exceed the performance of the physical engine;
wherein, the task comprises a video analysis task and/or a picture analysis task, wherein for the video analysis task, the performance of the physical engine is to support up to N channels of video analysis, wherein N is a positive integer; for the picture analysis task, the performance of the physical engine is to analyze up to M pictures per unit time, wherein M is a positive integer;
wherein, the edge intelligent device, when limiting the performance of each virtual engine in the multiple virtual engines based on the performance of the physical engine, is specifically configured for: limiting a sum of the number of video channels enabled by the multiple virtual engines to be less than or equal to N in case that the multiple virtual engines all perform video analysis; or limiting a sum of the number of pictures analyzed per unit time by the multiple virtual engines to be less than or equal to M in case that the multiple virtual engines all perform picture analysis; or limiting the maximum number of pictures analyzed per unit time by at least one virtual engine for performing picture analysis to: an equivalent picture processing number * (N-N1), wherein N1 is less than N, and is greater than or equal to 0, N1 is the number of video channels enabled by a virtual engine for performing video analysis, and the equivalent picture processing number is the number of pictures that can be analyzed when a capacity to process one channel of video analysis is used for performing picture analysis.

19. The system according to claim 14, wherein the edge intelligent device is further configured for:
obtaining an operation signal, wherein the operation signal is configured for dragging a first object representing an algorithm model from a first display area to a second display area, the first display area displays at least one first object, each first object corresponding to one algorithm model, and the second display area displays at least one second object, each second object corresponding to one virtual engine; in response to the operation signals, binding, in case that an overlap degree between the first object and a predetermined second object in the second display area exceeds a threshold, an algorithm model corresponding to the first object to an virtual engine corresponding to the predetermined second object; or creating, each time after an algorithm model is loaded in the physical engine, a model handle corresponding to the loaded algorithm model; obtaining identification information of a virtual engine to be bound with the loaded algorithm model; establishing a correspondence between the model handle corresponding to the loaded algorithm model and the identification information, to bind the loaded algorithm model to the virtual engine corresponding to the identification information.
